# FASCICULE DE BREVET EUROPEEN

(11) **EP 3 208 866 B1**
(45) Date de publication et mention de la délivrance du brevet: **26.09.2018**
(21) Numéro de dépôt: 17155548.5
(22) Date de dépôt: 10.02.2017
(51) Int. Cl.: H01M 2/10, H01M 10/04, H01M 10/0525, H01M 10/058

(54) **SYSTÈME DE COMPENSATION DU GONFLEMENT D'ÉLÉMENTS ÉLECTROCHIMIQUES**
KOMPENSATIONSSYSTEM DER QUELLUNG VON ELEKTROCHEMISCHEN ELEMENTEN
SYSTEM TO COMPENSATE FOR THE SWELLING OF ELECTROCHEMICAL ELEMENTS

(30) Priorité: 18.02.2016 FR 1651299
(43) Date de publication de la demande: 23.08.2017
(73) Titulaire: SAFT, 92300 Lavallois-Perret (FR)
(72) Inventeur: NARBONNE, Alexandre, 33290 BLANQUEFORT (FR); CHESNAIS, Marc, 33160 ST MEDARD EN JALLES (FR); CALMEJANE, Jérôme, 33750 SAINT GERMAIN DU PUCH (FR)
(74) Mandataire: Hirsch & Associés

(56) Documents cités:
- US-A1- 2009 061 299
- US-A1- 2013 252 063

## Description

### DOMAINE TECHNIQUE

L'invention se rapport au domaine technique des systèmes de compensation du gonflement d'éléments électrochimiques constituant une batterie.

### ETAT DE LA TECHNIQUE

Une batterie d'éléments électrochimiques comprend une pluralité d'éléments électrochimiques, encore désignés dans ce qui suit par le terme « élément(s) », qui sont assemblés côte à côte dans un coffre de groupement commun. Ce coffre est destiné à maintenir en position fixe les éléments lors du transport ou de l'utilisation de la batterie.

On observe au cours de la charge d'un élément hermétique de type lithium-ion un gonflement du conteneur de l'élément. Dans le cas d'un élément de format parallélépipédique (synonyme de format prismatique), le gonflement se produit essentiellement sur les deux faces planes latérales opposées les plus grandes du conteneur. Ce gonflement s'amplifie au fur et à mesure que l'état de charge de l'élément se rapproche de l'état complètement chargé. Comme les éléments sont accolés les uns derrière les autres dans le coffre de groupement et que chaque élément subit une augmentation de son épaisseur, on observe une augmentation notable de la longueur totale de la batterie qui résulte de la somme des augmentations des épaisseurs des éléments. Or, comme le coffre de groupement est généralement constitué d'un matériau rigide et que l'espace libre entre les éléments et les parois du coffre est limité, le gonflement des éléments soumet les parois du coffre à des forces de pression qui peuvent conduire à sa déformation irréversible, voire à son endommagement. Par conséquent, on cherche un dispositif qui empêche le coffre de se déformer sous l'effet du gonflement des éléments au cours de leur charge.

Pour remédier à ce problème, il est connu d'insérer entre deux faces de deux éléments un ressort ou une pièce déformable. Au cours de la charge, l'augmentation de volume des éléments est compensée par la réduction de la longueur du ressort ou par la réduction de l'épaisseur de la pièce déformable. On peut citer comme exemple de matériau de pièce déformable les mousses de silicone ou de polyuréthane ou de polychlorure de vinyle commercialisées par la Société Saint-Gobain sous la marque NORSEAL®. Néanmoins, cette solution n'est pas totalement satisfaisante car l'emploi d'une mousse confère à l'assemblage des éléments une rigidité insuffisante. De plus, la variation de la longueur de l'assemblage des éléments n'est parfois pas complètement supprimée. Enfin, la force de compression générée par les éléments n'est pas maîtrisée. L'emploi d'un ressort métallique entre deux éléments n'est pas non plus une solution satisfaisante car elle peut conduire à un court-circuit, le conteneur des éléments étant généralement métallique. De plus, le métal du ressort possédant une bonne conductivité thermique, celui-ci propage rapidement toute augmentation de température d'un élément vers l'élément voisin.

Des documents décrivent des systèmes de compensation du gonflement des éléments d'une batterie. Par exemple, le document CN 201038203 décrit un élément prismatique étanche de type lithium-ion placé dans une enveloppe rigide. Des nervures ont été disposées sur deux faces latérales opposées de cette enveloppe. Il est dit que la présence de ces nervures permet de réduire le gonflement de l'élément, et donc les risques d'explosion.

Le document JP 2014107217 décrit un élément de format globalement prismatique, dans lequel deux faces latérales opposées du conteneur de l'élément présentent un bombement. Ce bombement est situé au voisinage du centre de chaque face. Il est prévu lors de la fabrication du conteneur dans le but d'augmenter le volume disponible pour le faisceau électrochimique. Une cale en résine est placée entre deux éléments électrochimiques voisins. Cette cale présente la particularité d'avoir une épaisseur variable. La partie de la cale située au contact du bombement a une épaisseur inférieure à celle située aux extrémités de la cale au contact de la périphérie d'une face de l'élément. Grâce à cette cale d'épaisseur variable, il est possible de maintenir un bon contact entre la cale et l'élément. Cependant, la solution décrite dans ce document s'applique à un conteneur d'élément ayant la forme d'un parallélépipède ovalisé. Or, ce format d'élément n'est pas courant.

Il subsiste donc un besoin de mettre à disposition un système qui empêche une variation des dimensions du coffre de groupement lorsque celui-ci contient un ou plusieurs éléments électrochimiques hermétiques.

### RESUME DE L'INVENTION

A cet effet, l'invention propose une batterie comprenant au moins deux éléments électrochimiques de format prismatique, dans laquelle les éléments électrochimiques sont séparés par une cale rigide présentant une dureté supérieure ou égale à 90 Shore A selon la norme ASTM D 2240 et par une cale souple présentant une dureté allant jusqu'à 60 Shore A selon la norme ASTM D 2240, la cale rigide et la cale souple étant électriquement isolantes, la cale souple comprenant un matériau dont la conductivité thermique est inférieure ou égale à 0,5 W/(m.K) .

La cale rigide et/ou la cale souple peuvent être constituées soit d'un matériau isolant électrique, soit d'un premier matériau conducteur électrique recouvert d'un second matériau isolant électrique. Selon un mode de réalisation préféré, la cale souple est constituée de matière plastique ou est constituée d'un ressort en métal recouvert d'un matériau isolant, telle qu'une matière plastique.

Selon un mode de réalisation préféré, la cale souple comprend un matériau dont la conductivité thermique va de 0,02 à 0,2 W/(m.K).

Selon un mode de réalisation préféré, la cale souple comprend plusieurs portions de duretés différentes. Une première portion au contact du voisinage du centre d'une paroi de l'élément électrochimique peut présenter une dureté inférieure à celle d'une seconde portion au contact du voisinage de la périphérie de cette paroi de l'élément électrochimique.

Selon un mode de réalisation préféré, la cale rigide comporte une partie verticale et une partie horizontale, la partie verticale étant disposée contre une paroi verticale d'un élément électrochimique et la partie horizontale étant disposée contre une paroi horizontale de cet élément électrochimique. La partie horizontale de la cale rigide peut comporter au moins un orifice au travers duquel une borne de sortie de courant de l'élément électrochimique vient s'insérer.

La batterie peut comprendre autant de cales rigides que d'éléments électrochimiques, les cales rigides formant une seule pièce.

Selon un mode de réalisation, la batterie comprend autant de cales rigides que d'éléments électrochimiques, les cales rigides, étant distinctes les unes des autres.

Selon un mode de réalisation, les cales rigides ont la forme d'un cadre rectangulaire.

Selon un mode de réalisation, la batterie comprend autant de cales rigides que d'éléments électrochimiques, chaque cale étant formée d'au moins deux sous-composants distincts. Les deux sous-composants distincts peuvent être chacun en forme de « T », l'un étant disposé au voisinage de la partie supérieure de l'élément électrochimique, l'autre étant disposé au voisinage de la partie inférieure de l'élément électrochimique.

Selon un mode de réalisation, une cale rigide comprend au moins trois sous-composants distincts, chaque sous-composant ayant par exemple une forme circulaire.

Selon un mode de réalisation, la batterie comprend une seule cale souple commune à tous les éléments électrochimiques.

Selon un mode de réalisation, la batterie comprend autant de cales souples que d'éléments électrochimiques, les cales souples étant distinctes les unes des autres.

Les éléments électrochimiques peuvent être de type lithium-ion.

L'invention a également pour objet un procédé d'assemblage d'une batterie comprenant au moins deux éléments électrochimiques, ledit procédé comprenant les étapes de :
a) mise à disposition d'un premier élément électrochimique de format prismatique,
b) mise en place d'une cale rigide présentant une dureté supérieure ou égale à 90 Shore A selon la norme ASTM D 2240 et d'une cale souple présentant une dureté allant jusqu'à 60 Shore A selon la norme ASTM D 2240, contre l'une des faces du premier élément électrochimique, la cale souple comprenant un matériau dont la conductivité thermique est inférieure ou égale à 0,5 W/(m.K) ;
c) accolement d'un second élément électrochimique de format prismatique contre la cale rigide et la cale souple.

Selon un mode de réalisation, avant l'étape c) d'accolement du second élément électrochimique, la cale souple a une épaisseur supérieure à celle de la cale rigide, et au cours de l'étape c) d'accolement du second élément électrochimique, l'épaisseur de la cale souple se réduit sous la compression exercée par le second élément électrochimique.

### DESCRIPTION DES FIGURES

La figure la représente une vue d'un élément prismatique, d'une cale rigide et d'une cale souple avant assemblage.
La figure 1b représente une vue d'un élément prismatique assemblé avec une cale rigide et une cale souple.
La figure 2a représente une vue en coupe longitudinale, au cours de l'étape d'assemblage, de deux éléments électrochimiques entre lesquels ont été insérées une cale souple et une cale rigide.
La figure 2b représente une vue en coupe d'un assemblage comprenant deux éléments électrochimiques entre lesquels ont été insérées une cale souple et une cale rigide. Elle illustre les déformations qui se produisent sur les éléments électrochimiques et sur la cale souple pour différents états de charge de l'élément.
Les figures 3a à 3d représentent différentes formes et dispositions de cales rigides.
Les figures 4a et 4b représentent différentes formes et dispositions de cales souples.
La figure 5 représente différentes possibilités de combinaison entre les modes de réalisation d'une cale rigide et ceux d'une cale souple.

### DESCRIPTION DE MODES DE REALISATION

L'invention propose d'insérer lors de l'assemblage de deux éléments prismatiques, une cale rigide et une cale souple entre ces éléments, ces deux cales étant isolantes électriquement.

La cale rigide a pour fonction de maintenir constante la distance entre deux éléments voisins. Elle joue le rôle d'une entretoise. On entend par cale rigide une cale constituée d'un matériau dont la dureté est supérieure ou égale à 90 Shore A mesurée selon la norme ASTM D 2240. Elle peut être constituée d'une matière thermoplastique, thermodurcissable, d'un élastomère, d'un composite, d'une céramique, d'un métal dont la surface est revêtue d'un vernis ou dont la surface a subi un traitement la rendant isolante électriquement.

La cale souple a pour fonction d'absorber l'augmentation de l'épaisseur de l'élément auquel elle est associée au cours de la charge de l'élément. Par cale souple, on entend une cale constituée d'un matériau présentant une dureté allant jusqu'à 60 Shore A mesurée selon la norme ASTM D 2240. Un matériau capable d'exercer une pression allant de 0,2 à 5 daN/cm² (20 à 500 kPa) convient aussi pour fabriquer la cale souple. On choisit de préférence un matériau dont la dureté va de 0,25 à 1 daN/cm² (25 à 100 kPa), pour une déformation de 20% de son épaisseur.

Le matériau préféré pour la cale souple est une matière plastique. On peut citer les mousses et les élastomères thermoplastiques ou thermodurcissables. Des exemples de matériaux disponibles dans le commerce sont les mousses de silicone cellulaire de marque ProtectION⁺™ SF50 et SF70 commercialisées par Saint-Gobain, la mousse de polyuréthane cellulaire Korel® K20 commercialisée par Saint-Gobain ou le caoutchouc cellulaire de monomère d'éthylène-propylène-diène (EPDM) Celgummi 1722 commercialisé par National Gummi. Il est aussi possible d'utiliser un ressort en plastique ou un ressort métallique recouvert d'une couche d'un matériau isolant thermiquement à la place d'une mousse.

On choisit un matériau présentant une conductivité thermique inférieure à 0,5 W/(m.K), de préférence allant de 0,02 à 0,2 W/(m.K). Cela permet d'isoler thermiquement l'élément sur lequel la cale est installée et d'éviter que la chaleur générée par un élément fonctionnant de manière anormale ne se propage aux éléments voisins.

La figure la représente un élément prismatique (1), une cale rigide (2) et une cale souple (3) avant assemblage. La cale rigide (2) comprend une partie verticale (4) et une partie horizontale (5). La partie verticale (4) est plaquée contre une paroi verticale (6) de l'élément prismatique et la partie horizontale (5) repose sur une paroi horizontale (7) de cet élément. La partie verticale (4) a la forme d'un cadre rectangulaire dont la hauteur et la largeur sont sensiblement identiques à celles de l'élément auquel la cale rigide est associée. La cale souple (3) est logée dans l'espace situé dans le cadre rectangulaire. De préférence, la cale souple occupe tout l'espace situé à l'intérieur du cadre.

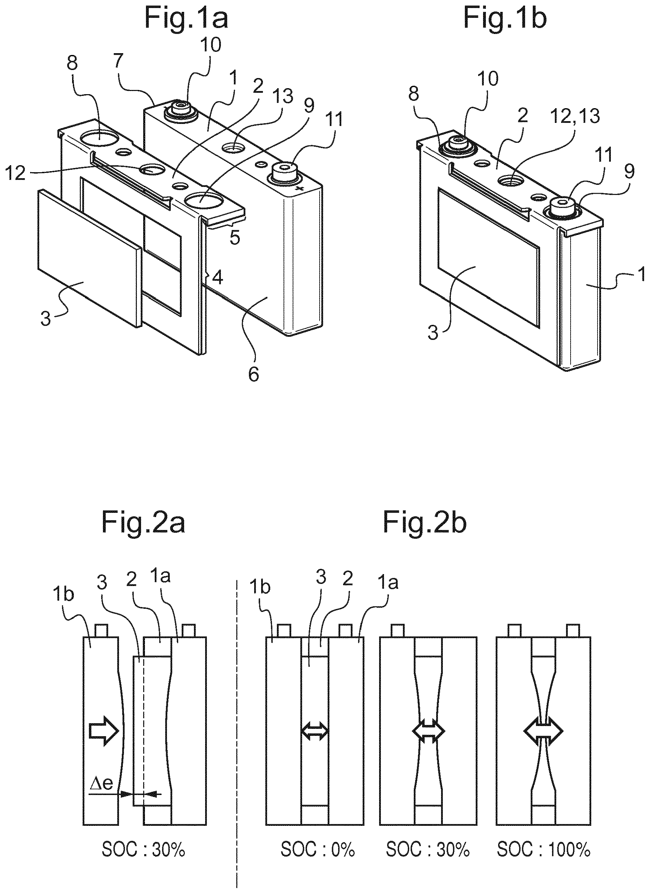

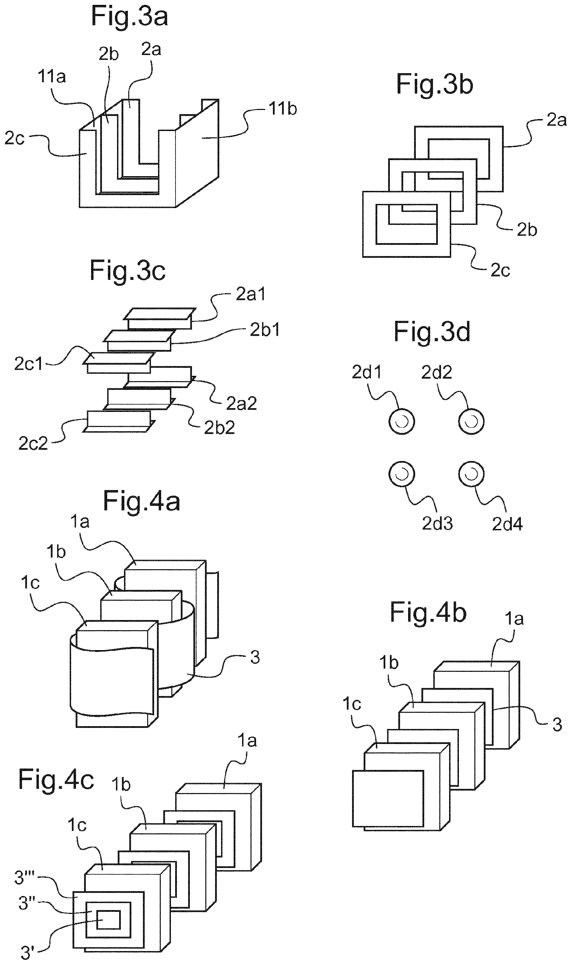

La partie horizontale (5) de la cale rigide (2) peut comporter au moins un orifice (8, 9) au travers duquel vient s'insérer une borne de sortie de courant (10, 11) de l'élément. Cet orifice empêche le déplacement de la cale rigide (2) sur l'élément (1). De préférence, la partie horizontale comporte deux orifices, l'un (8) destiné à recevoir la borne de sortie de courant négative (10), l'autre (9) destiné à recevoir la borne de sortie de courant négative (11). Les deux orifices peuvent avoir des sections différentes, ce qui permet de différencier l'emplacement de la borne positive de celui de la borne négative. La partie horizontale (5) peut en outre comprendre un orifice (12) coïncidant avec l'emplacement de l'orifice de remplissage en électrolyte ou avec l'emplacement d'une soupape de sécurité (13). La Figure 1b représente une vue d'un élément prismatique (1) assemblé avec une cale rigide (2) et une cale souple (3). Les bornes de sortie de courant (10,11) traversent les orifices (8, 9). Il convient de noter que l'invention n'est pas limitée au mode de fixation de la cale rigide décrit aux figures 1a et 1b. La cale rigide pourrait être fixée d'une autre manière à l'élément. La cale rigide peut simplement être plaquée contre la paroi verticale (6) de l'élément sans comprendre de partie horizontale (5). La figure 3b montre trois cadres rigides dépourvus de partie horizontale.

Dans un mode de réalisation préféré, l'épaisseur de l'élément est sensiblement constante sur toute sa hauteur. De même, l'épaisseur de la cale rigide et l'épaisseur de la cale souple sont sensiblement constantes sur toute leur hauteur.

La Figure 2a représente une vue en coupe longitudinale de deux éléments (1a, 1b) entre lesquels ont été insérées une cale rigide (2) et une cale souple (3). L'épaisseur de la cale souple est en général supérieure à celle de la cale rigide afin qu'au cours de l'assemblage du second élément (1b) sur le premier élément (la), l'accolement du second élément (1b) contre la cale rigide (2) provoque une compression de la cale souple (3). Au cours de l'assemblage, la cale souple (3) soumet les éléments électrochimiques (1a, 1b) à une force de compression. Cette force de compression s'exerce en raison de la différence (Δe) entre l'épaisseur de la cale rigide et celle de la cale souple, même en l'absence de gonflement des éléments. La force de compression en l'absence de gonflement des éléments est dénommée dans ce qui suit par le terme « précompression ». Pour une dureté donnée du matériau de cale souple, il est possible de faire varier cette précompression. Plus, la différence Δe entre l'épaisseur de la cale rigide et celle de la cale couple est importante, plus la précompression l'est aussi. Il est également possible pour une différence d'épaisseur donnée entre la cale souple et la cale rigide, d'augmenter la précompression en augmentant la dureté du matériau de cale souple. L'homme du métier peut donc faire varier la précompression des éléments en faisant varier soit la différence d'épaisseur entre la cale souple et la cale rigide, soit la nature du matériau de la cale souple. L'existence d'une précompression permet d'éviter une déformation des électrodes du faisceau électrochimique de l'élément. Un matériau de cale souple de dureté supérieure à environ 90 Shore A ne se déformerait pas assez, ce qui pourrait conduire à une augmentation importante de la pression interne de l'élément. De préférence, le matériau de cale souple présente une dureté supérieure à 30 Shore OO selon la norme ASTM D2240. Le léger gonflement visible sur les deux faces en regard l'une de l'autre des deux éléments (1a, 1b) s'explique par le fait que les éléments sont assemblés alors qu'ils sont partiellement chargés. La valeur d'état de charge de 30% (SOC : 30%) est donnée sur la Figure 2a à titre indicatif pour des éléments prismatiques de type lithium-ion.

La Figure 2b illustre les déformations qui se produisent sur les éléments (1a, 1b) et sur la cale souple (3) au cours d'une charge de ces éléments. Le schéma de gauche montre qu'à l'état déchargé (SOC=0%), les éléments (1a, 1b) ne présentent pas de gonflement. La cale souple est néanmoins précomprimée. Au cours de la charge des éléments, un gonflement apparait sur les parois latérales des éléments. Il prend de l'amplitude et est absorbé par la réduction de l'épaisseur de la cale souple comme le montrent les schémas correspondant aux états de charge de 30 et 100%. La cale souple exerce une pression croissante sur la paroi de l'élément au fur et à mesure que celui-ci gonfle. Le matériau de la cale souple peut par exemple, exercer :
- une pression comprise entre 0,2 et 1 daN/cm² pour un élément complètement déchargé ;
- une pression comprise entre 1 et 2 daN/cm² pour un élément chargé à 30%;
- une pression comprise entre 2 et 5 daN/cm² pour un élément chargé à 100%;

La cale rigide (2) n'est pas déformée au cours de la charge et maintient un écartement constant entre les zones périphériques des deux éléments (1a, 1b). Par conséquent, la longueur totale des éléments placés dans le coffre de groupement est maintenue constante.

La cale rigide peut prendre différentes formes et être disposée de différentes façons.

Dans une première variante représentée à la figure 3a, une pièce unique forme les cales rigides. Cette pièce est constituée de plusieurs cloisons parallèles (2a, 2b, 2c) rendues solidaires entre elles grâce à deux plaques verticales (11a, 11b) fixées perpendiculairement à chaque cloison. Cette pièce unique peut recevoir deux éléments (non représentés sur la figure 3a).

Dans une seconde variante représentée figure 3b, les cales rigides ont une forme de cadre. Chaque élément est associé à une cale rigide.

Dans une troisième variante, chaque cale rigide est formée de plusieurs sous-composants, par exemple 2, 3 ou 4 sous-composants.

Comme représenté à la figure 3c, la cale rigide peut être constituée de deux sous-composants (2a1, 2a2, 2b1, 2b2, 2c1, 2c2), chaque sous-composant ayant par exemple la forme d'un « T ». Un premier sous-composant (2a1, 2b1, 2c1) est disposé au voisinage de la partie supérieure de l'élément. Un second sous-composant (2a2, 2b2, 2c2) est disposé au voisinage de la partie inférieure de l'élément. L'épaisseur de la partie verticale de la forme en « T » fixe l'écartement entre deux éléments.

Comme représenté à la figure 3d, la cale rigide peut aussi être constituée de quatre sous-composants (2d1, 2d2, 2d3, 2d4), chaque sous-composant ayant la forme d'un plot. L'épaisseur du plot détermine la distance entre deux éléments voisins. Les quatre sous-composants se placent au voisinage des quatre coins de l'élément.

La cale souple peut prendre différentes formes et être disposée de différentes façons.

Dans une première variante représentée figure 4a, une pièce unique (3) forme une cale souple commune à plusieurs éléments (1a, 1b, 1c). Cette pièce se présente sous la forme d'un ruban qui effectue un chemin en forme de S autour des éléments.

Dans une seconde variante représentée figure 4b, chaque cale souple (3) a une forme rectangulaire et il existe une cale souple par élément.

Dans une troisième variante représentée figure 4c, la cale souple (3) est constituée de plusieurs portions (3', 3", 3''') en forme de cadre s'emboitant les uns dans les autres. Ces portions présentent des duretés différentes en fonction de leur position par rapport à l'élément. Par exemple, il est avantageux de prévoir un matériau plus souple pour la portion de la cale souple en contact avec la région située au centre de la face de l'élément (3'), car c'est cette région de l'élément qui gonfle le plus. On peut prévoir un matériau plus rigide pour la portion de la cale souple en contact avec la région située à la périphérie de la face de l'élément (3'"), car c'est cette région de l'élément qui gonfle le moins. Cet effet peut être également obtenu en utilisant une cale souple constituée d'une seule pièce faite d'un matériau dont la dureté va décroissante au fur et à mesure que l'on s'approche du centre de la face de l'élément.

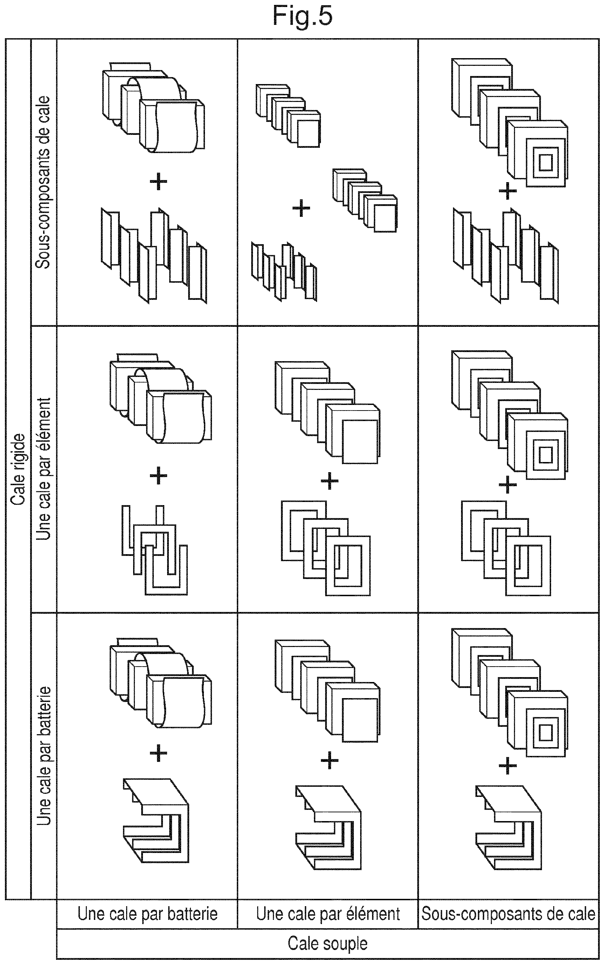

La Figure 5 représente les différentes possibilités de combinaison entre les différents modes de réalisation de la cale rigide et ceux de la cale souple. Le mode de réalisation préféré est celui dans lequel une cale rigide en forme de cadre est associée à une cale souple en forme de rectangle (2^{ème} colonne, 2^{ème} ligne du tableau de la Figure 5).

L'invention a également pour objet un procédé de fabrication d'une batterie qui utilise le système de compensation du gonflement des éléments, tel que décrit ci-avant. Ce procédé peut être utilisé pour fabriquer une batterie comprenant au moins deux éléments. Il comprend les étapes suivantes :
a) mise à disposition d'un premier élément de format prismatique (la),
b) mise en place d'une première cale rigide (2) présentant une dureté supérieure ou égale à 90 Shore A selon la norme ASTM D 2240 et d'une première cale souple (3) présentant une dureté allant jusqu'à 60 Shore A selon la norme ASTM D 2240, contre l'une des faces du premier élément (6), la cale souple comprenant un matériau dont la conductivité thermique est inférieure ou égale à 0,5 W/(m.K) ;
c) accolement d'un second élément de format prismatique (1b) contre la première cale rigide et la première cale souple,

La première cale souple (3) a généralement une épaisseur supérieure à celle de la première cale rigide (2), et au cours de l'étape c) d'accolement du second élément (1b), l'épaisseur de la première cale souple se réduit sous la compression exercée par le second élément.

Dans un mode de réalisation, le procédé comprend en outre une étape d) de mise en place d'une seconde cale rigide présentant une dureté supérieure ou égale à 90 Shore A selon la norme ASTM D 2240 et d'une seconde cale souple présentant une dureté allant jusqu'à 60 Shore A selon la norme ASTM D 2240, contre l'une des faces du second élément. Selon une variante de ce mode de réalisation, les étapes c) et d) sont inversées, c'est-à-dire qu'on munit d'abord les éléments de cales souple et rigide avant de les accoler l'un à l'autre.

Il est entendu que ce procédé de fabrication n'est pas limité à l'assemblage de deux éléments dans un coffre de groupement mais qu'il peut être utilisé quel que soit le nombre d'éléments présents dans le coffre.

Dans un mode de réalisation, l'assemblage comprend autant de cales rigides et de cales souples que d'éléments.

Dans un mode de réalisation préféré, pour un nombre donné n d'éléments, l'assemblage comprend n+1 ensembles de cales souples et de cales rigides, c'est-à-dire que chaque élément est muni d'une cale souple et d'une cale rigide, excepté pour l'un des deux éléments situé à l'extrémité de l'assemblage, qui comprend alors une cale souple et une cale rigide sur deux faces opposées.

Les éléments peuvent être assemblés dans le coffre de groupement selon une orientation pour laquelle toutes les bornes de sortie de courant d'une même polarité sont selon une même ligne. Mais ils peuvent aussi être assemblés selon une orientation pour laquelle une alternance de bornes de courant de polarités opposées est disposée selon une même ligne.

L'invention résout le problème du gonflement des éléments électrochimiques prismatiques lorsque ceux-ci sont assemblés côte à côte, tout en préservant l'isolation thermique entre éléments. La compression des électrodes, nécessaire pour préserver la tenue de la matière active des électrodes est néanmoins garantie.

Un autre avantage de l'invention est qu'elle permet la fabrication d'une batterie dont la longueur est constante au cours du temps.

Enfin, un avantage de l'invention est de faciliter l'intégration d'autres composants dans la batterie, tels que les connexions de puissance entre les bornes électriques.

L'invention a été décrite dans ce qui précède en référence à des éléments électrochimiques de forme prismatique mais l'homme du métier pourrait envisager de l'appliquer à des éléments de format cylindrique, en utilisant des cales souples et rigides de format cylindrique.

## Revendications

1. Batterie comprenant au moins deux éléments électrochimiques (1a, 1b) de format prismatique, dans laquelle les éléments électrochimiques sont séparés par une cale rigide (2) présentant une dureté supérieure ou égale à 90 Shore A selon la norme ASTM D 2240 et par une cale souple (3) présentant une dureté allant jusqu'à 60 Shore A selon la norme ASTM D 2240, la cale rigide et la cale souple étant électriquement isolantes,
la cale souple comprenant un matériau dont la conductivité thermique est inférieure ou égale à 0,5 W/(m.K).

2. Batterie selon la revendication 1, dans laquelle la cale rigide (2) et/ou la cale souple (3) est (sont) constituée(s) soit d'un matériau isolant électrique, soit d'un premier matériau conducteur électrique recouvert d'un second matériau isolant électrique.

3. Batterie selon la revendication 2, dans laquelle la cale souple (3) est constituée de matière plastique ou est constituée d'un ressort en métal recouvert d'un matériau isolant, telle qu'une matière plastique.

4. Batterie selon l'une des revendications précédentes, dans laquelle la cale souple (3) comprend un matériau dont la conductivité thermique va de 0,02 à 0,2 W/(m.K).

5. Batterie selon l'une des revendications précédentes, dans laquelle la cale souple (3) comprend plusieurs portions de duretés différentes (3', 3", 3'").

6. Batterie selon la revendication 5, dans laquelle une première portion (3') au contact du voisinage du centre d'une paroi de l'élément électrochimique présente une dureté inférieure à celle d'une seconde portion (3'") au contact du voisinage de la périphérie de cette paroi de l'élément électrochimique.

7. Batterie selon l'une des revendications précédentes, dans laquelle la cale rigide (2) comporte une partie verticale (4) et une partie horizontale (5), la partie verticale étant disposée contre une paroi verticale (6) d'un élément électrochimique et la partie horizontale étant disposée contre une paroi horizontale (7) de cet élément électrochimique.

8. Batterie selon la revendication 7, dans laquelle la partie horizontale (5) de la cale rigide comporte au moins un orifice (8, 9) au travers duquel une borne de sortie de courant (10, 11) de l'élément électrochimique s'insère.

9. Batterie selon l'une des revendications précédentes, comprenant autant de cales rigides que d'éléments électrochimiques, les cales rigides formant une seule pièce.

10. Batterie selon l'une des revendications 1 à 8, comprenant autant de cales rigides que d'éléments électrochimiques, les cales rigides, étant distinctes les unes des autres.

11. Batterie selon la revendication 10, dans laquelle les cales rigides ont la forme d'un cadre rectangulaire.

12. Batterie selon l'une des revendications 1 à 8, comprenant autant de cales rigides que d'éléments électrochimiques, chaque cale étant formée d'au moins deux sous-composants distincts (2a1, 2a2, 2b1, 2b2, 2c1, 2c2).

13. Batterie selon la revendication 12, dans laquelle les deux sous-composants distincts sont chacun en forme de « T », l'un étant disposé au voisinage de la partie supérieure (2a1, 2b1, 2c1) de l'élément électrochimique, l'autre étant disposé au voisinage de la partie inférieure (2a2, 2b2, 2c2) de l'élément électrochimique.

14. Batterie selon la revendication 12, dans laquelle une cale rigide comprend au moins trois sous-composants distincts, chaque sous-composant ayant par exemple une forme circulaire (2d1, 2d2, 2d3, 2d4).

15. Batterie selon l'une des revendications précédentes, comprenant une seule cale souple commune à tous les éléments électrochimiques.

16. Batterie selon l'une des revendications 1 à 14, comprenant autant de cales souples que d'éléments électrochimiques, les cales souples étant distinctes les unes des autres.

17. Batterie selon l'une des revendications précédentes, dans laquelle les éléments électrochimiques sont de type lithium-ion.

18. Procédé d'assemblage d'une batterie comprenant au moins deux éléments électrochimiques (1a, 1b), ledit procédé comprenant les étapes de :
a) mise à disposition d'un premier élément électrochimique (1a) de format prismatique,
b) mise en place d'une cale rigide (2) présentant une dureté supérieure ou égale à 90 Shore A selon la norme ASTM D 2240 et d'une cale souple (3) présentant une dureté allant jusqu'à 60 Shore A selon la norme ASTM D 2240, contre l'une des faces du premier élément électrochimique, la cale souple comprenant un matériau dont la conductivité thermique est inférieure ou égale à 0,5 W/(m.K) ;
c) accolement d'un second élément électrochimique (1b) de format prismatique contre la cale rigide et la cale souple.

19. Procédé selon la revendication 18, dans lequel, avant l'étape c) d'accolement du second élément électrochimique (1b), la cale souple a une épaisseur supérieure à celle de la cale rigide, et au cours de l'étape c) d'accolement du second élément électrochimique, l'épaisseur de la cale souple se réduit sous la compression exercée par le second élément électrochimique.

## Patentansprüche

1. Batterie, die mindestens zwei elektrochemische Elemente (1a, 1b) mit prismatischem Format umfasst, in der die elektrochemischen Elemente durch eine starre Einlage (2), die eine Härte aufweist, die höher als oder gleich 90 Shore A gemäß der Norm ASTM D 2240 ist, und durch eine nachgiebige Einlage (3) getrennt sind, die eine Härte aufweist, die bis zu 60 Shore A gemäß der Norm ASTM D 2240 reichen kann, wobei die starre Einlage und die nachgiebige Einlage elektrisch isolierend sind, und die nachgiebige Einlage ein Material umfasst, dessen Wärmeleitfähigkeit niedriger als oder gleich 0,5 W/(m.K) ist.

2. Batterie nach Anspruch 1, wobei die starre Einlage (2) und/oder die nachgiebige Einlage (3) entweder aus einem elektrisch isolierenden Material oder aus einem ersten, elektrisch leitfähigen Material hergestellt ist/sind, das durch ein zweites, elektrisch isolierendes Material bedeckt ist."

3. Batterie nach Anspruch 2, wobei die nachgiebige Einlage (3) aus Kunststoff besteht oder aus einer Feder aus mit einem isolierenden Material, wie beispielsweise einem Kunststoff, bedecktem Metall besteht.

4. Batterie nach einem der vorhergehenden Ansprüche, wobei die nachgiebige Einlage (3) ein Material umfasst, dessen Wärmeleitfähigkeit von 0,02 bis 0,2 W/(m.K) reicht.

5. Batterie nach einem der vorhergehenden Ansprüche, wobei die nachgiebige Einlage (3) mehrere Abschnitte mit unterschiedlichen Härten (3', 3", 3'") umfasst.

6. Batterie nach Anspruch 5, wobei ein erster Abschnitt (3'), der mit der Nähe der Mitte einer Wand des elektrochemischen Elements in Kontakt ist, eine Härte aufweist, die niedriger ist als diejenige des zweiten Abschnitts (3"), der mit der Nähe des Umfangs dieser Wand des elektrochemischen Elements im Kontakt ist.

7. Batterie nach einem der vorhergehenden Ansprüche, wobei die starre Einlage (2) einen vertikalen Teil (4) und einen horizontalen Teil (5) aufweist, wobei der vertikale Teil gegen eine vertikale Wand (6) eines elektrochemischen Elements angeordnet ist, und der horizontale Teil gegen eine horizontale Wand (7) dieses elektrochemischen Elements angeordnet ist.

8. Batterie nach Anspruch 7, wobei der horizontale Teil (5) der starren Einlage mindestens eine Öffnung (8, 9) umfasst, durch die eine Stromausgangsklemme (10, 11) des elektrochemischen Elements eingeführt wird.

9. Batterie nach einem der vorhergehenden Ansprüche, die so viele starre Einlagen wie elektrochemische Elemente umfasst, wobei die starren Einlagen ein einziges Teil bilden.

10. Batterie nach einem der Ansprüche 1 bis 8, die so viele starre Einlagen wie elektrochemische Elemente umfasst, wobei die starren Einlagen voneinander getrennt sind.

11. Batterie nach Anspruch 10, wobei die starren Einlagen die Form eines rechteckigen Rahmens aufweisen.

12. Batterie nach einem der Ansprüche 1 bis 8, die so viele starre Einlagen wie elektrochemische Elemente umfasst, wobei jede Einlage aus mindestens zwei getrennten Unterbauelementen (2a1, 2a2, 2b1, 2b2, 2c1, 2c2) gebildet ist.

13. Batterie nach Anspruch 12, wobei die zwei getrennten Unterbauelemente jeweils T-förmig sind, wobei das eine in der Nähe des oberen Teils (2a1, 2b1, 2c1) des elektrochemischen Elements angeordnet ist, wobei das andere in der Nähe des unteren Teils (2a2, 2b2, 2c2) des elektrochemischen Elements angeordnet ist.

14. Batterie nach Anspruch 12, wobei eine starre Einlage mindestens drei getrennte Unterbauelemente umfasst, wobei jedes Unterbauelement zum Beispiel eine Kreisform (2d1, 2d2, 2d3, 2d4) aufweist.

15. Batterie nach einem der vorhergehenden Ansprüche, die eine einzige nachgiebige Einlage umfasst, die allen elektrochemischen Elementen gemein ist.

16. Batterie nach einem der Ansprüche 1 bis 14, die so viele nachgiebige Einlagen wie elektrochemische Elemente umfasst, wobei die nachgiebigen Einlagen voneinander getrennt sind.

17. Batterie nach einem der vorhergehenden Ansprüche, wobei die elektrochemischen Elemente vom Lithium-Ionen-Typ sind.

18. Verfahren zum Zusammenbauen einer Batterie, die mindestens zwei elektrochemische Elemente (1a, 1b) umfasst, wobei das Verfahren die folgenden Schritte umfasst:
a) Bereitstellen eines ersten elektrochemischen Elements (1a) mit prismatischem Format,
b) Einlegen einer starren Einlage (2), die eine Härte aufweist, die höher als oder gleich 90 Shore A gemäß der Norm ASTM D 2240 ist, und einer nachgiebigen Einlage (3), die eine Härte aufweist, die bis zu 60 Shore A gemäß der Norm ASTM D 2240 reicht, gegen eine der Seiten des ersten elektrochemischen Elements, wobei die nachgiebige Einlage ein Material umfasst, dessen Wärmeleitfähigkeit kleiner als oder gleich 0,5 W/(m.K) ist;
c) Anfügen eines zweiten elektrochemischen Elements (1b) mit prismatischem Format gegen die starre Einlage und die nachgiebige Einlage.

19. Verfahren nach Anspruch 18, wobei vor dem Schritt c) des Anfügens des zweiten elektrochemischen Elements (1b) die nachgiebige Einlage eine Dicke aufweist, die größer ist als diejenige der starren Einlage, und während des Schritts c) des Anfügens des zweiten elektrochemischen Elements die Dicke der nachgiebigen Einlage sich unter dem durch das zweite elektrochemische Element ausgeübten Zusammendrücken verringert.

## Claims

1. A battery comprising at least two electrochemical cells (1a, 1b) of prismatic format, wherein the electrochemical cells are separated by a rigid wedge (2) having a hardness greater than or equal to 90 Shore A according to the standard ASTM D 2240 and by a flexible wedge (3) having a hardness of up to 60 Shore A according to the standard ASTM D 2240, the rigid wedge and the flexible wedge being electrically insulating, the flexible wedge comprising a material whereof the thermal conductivity is less than or equal to 0.5 W/(m.K).

2. The battery according to claim 1, wherein the rigid wedge (2) and/or the flexible wedge (3) consist(s) of either electrically insulating material, or a first electrically conductive material covered with a second electrically insulating material.

3. The battery according to claim 2, wherein the flexible wedge (3) consists of plastic material or consists of a metal spring covered with an insulating material, such as plastic material.

4. The battery according to one of the preceding claims, wherein the flexible wedge (3) comprises a material whereof the thermal conductivity ranges from 0.02 to 0.2 W/(m.K).

5. The battery according to one of the preceding claims, wherein the flexible wedge (3) comprises several portions of different hardness (3', 3", 3"').

6. The battery according to claim 5, wherein a first portion (3') in contact near the center of a wall of the electrochemical cell has a hardness less than that of a second portion (3"') in contact near the periphery of this wall of the electrochemical cell.

7. The battery according to one of the preceding claims, wherein the rigid wedge (2) comprises a vertical part (4) and a horizontal part (5), the vertical part being disposed against a vertical wall (6) of an electrochemical cell and the horizontal part being disposed against a horizontal wall (7) of this electrochemical cell.

8. The battery according to claim 7, wherein the horizontal part (5) of the rigid wedge comprises at least one orifice (8, 9) through which a current output terminal (10, 11) of the electrochemical cell is inserted.

9. The battery according to one of the preceding claims, comprising as many rigid wedges as electrochemical cells, the rigid wedges forming a single piece.

10. The battery according to one of claims 1 to 8, comprising as many rigid wedges as electrochemical cells, the rigid wedges being separate from each other.

11. The battery according to claim 10, wherein the rigid wedges have the shape of a rectangular frame.

12. The battery according to one of claims 1 to 8, comprising as many rigid wedges as electrochemical cells, each wedge being formed by at least two separate sub-components (2a1, 2a2, 2b1, 2b2, 2c1, 2c2).

13. The battery according to claim 12, wherein the two separate sub-components are each in a "T" shape, one being disposed near the upper part (2a1, 2b1, 2c1) of the electrochemical cell, the other being disposed near the lower part (2a2, 2b2, 2c2) of the electrochemical cell.

14. The battery according to claim 12, wherein a rigid wedge comprises at least three separate sub-components, each sub-component having for example a circular shape (2d1, 2d2, 2d3, 2d4).

15. The battery according to one of the preceding claims, comprising a single flexible wedge common to all the electrochemical cells.

16. The battery according to one of claims 1 to 14, comprising as many flexible wedges as electrochemical cells, the flexible wedges being separate from each other.

17. The battery according to one of the preceding claims, wherein the electrochemical cells are of lithium-ion type.

18. A method for assembly of a battery comprising at least two electrochemical cells (1a, 1b), said method comprising the steps of:
a) providing a first electrochemical cell (1a) of prismatic format,
b) placing a rigid wedge (2) having a hardness greater than or equal to 90 Shore A according to the standard ASTM D 2240 and a flexible wedge (3) having a hardness of up to 60 Shore A according to the standard ASTM D 2240, against one of the faces of the first electrochemical cell, the flexible wedge comprising a material whereof the thermal conductivity is less than or equal to 0.5 W/(m.K);
c) joining a second electrochemical cell (1b) of prismatic format against the rigid wedge and the flexible wedge.

19. The method according to claim 18, wherein, prior to step c) for joining the second electrochemical cell (1b), the flexible wedge has a thickness greater than that of the rigid wedge, and during step c) for joining the second electrochemical cell, the thickness of the flexible wedge reduces under the compression exerted by the second electrochemical cell.
